# EUROPEAN PATENT SPECIFICATION

(11) **EP 4 274 119 B1**
(45) Date of publication and mention of the grant of the patent: **08.04.2026**
(21) Application number: 22171648.3
(22) Date of filing: 04.05.2022
(51) Int. Cl.: H04B 17/10, H04B 7/185

(54) **RADIO FREQUENCY MEASUREMENT METHOD, RADIO FREQUENCY SYSTEM AND A COMPUTER PROGRAM**
HOCHFREQUENZMESSVERFAHREN, HOCHFREQUENZSYSTEM UND COMPUTERPROGRAMM
PROCÉDÉ DE MESURE DE RADIOFRÉQUENCE, SYSTÈME DE RADIOFRÉQUENCE ET PROGRAMME INFORMATIQUE

(43) Date of publication of application: 08.11.2023
(73) Proprietor: Rohde & Schwarz GmbH & Co. KG, 81671 München (DE)
(72) Inventor: Aerts, Wim, 81671 München (DE); Eberwein, Walter, 81671 München (DE); Pedrosa, Lucio, 81671 München (DE)
(74) Representative: Novagraaf Group

(56) References cited:
- US-A1- 2019 045 406
- JORGE GOMEZ PONCE ET AL: "Air-to-Ground Directional Channel Sounder With 64-antenna Dual-polarized Cylindrical Array", ARXIV.ORG, CORNELL UNIVERSITY LIBRARY, 201 OLIN LIBRARY CORNELL UNIVERSITY ITHACA, NY 14853, 13 February 2021 (2021-02-13), XP081894035

## Description

The invention generally relates to a radio frequency measurement method and a radio frequency measurement system. Further, the invention relates to a computer program.

Unmanned aerial vehicles (UAVs), frequently called drones, are known in the art and used in a variety of applications ranging from hobby-flight drones to emergency and safety assistance drones for safety services of police and firefighters. UAVs use single antennas or antenna arrays for communication, navigation as well as orientation with respect to the earth surface frame. Polarization of ingoing and outgoing radio frequency (RF) signals is essential and a respective alignment of transmitter and receiver regarding their respective polarization orientation is critical. Manoeuvring an UAV can lead to a respective relative change of orientation of the polarization of the RF signals.

Additionally or alternatively, UAVs are used to measure respective RF signals emitted with different polarizations or being inherently different in polarization in an air space, in particular an air space monitored by the UAVs. In all described cases, a change of relative RF field polarization can occur. In the state of the art, UAVs had to be landed to change the respective polarization to be sensed. This approach is time consuming and renders measurements of polarization on a given location and time difficult.

A common technical problem arises regarding polarization measurements on a given location and time as well as regarding the time it takes to perform respective polarization measurements. Furthermore, the known systems are complicated to operate, expensive and exhibit a certain and sometimes limited lifetime.

In "Air-to-Ground Directional Channel Sounder With 64-antenna Dual-polarized Cylindrical Array" by Jorge Gomez-Ponce et al., Arxiv.org, Cornell University Library, 201 Olin Library Cornell University Ithaca, NY 14853, 13 February 2021, a system is described that comprises a transmitter drone and a ground receiver having an antenna array and an oscilloscope for measuring signals transmitted by the transmitter drone.

It is an object of the present invention to solve these technical problems and to improve RF measurements, to reduce time of these measurements, to increase repeatability of measurements at a given location and time. Furthermore, the equipment costs shall be reduced.

According to the invention a radio frequency (RF) measurement method is provided which comprises the steps of capturing an RF signal with at least one antenna that is connected to at least one measurement device via at least two channels. Hence, the captured RF signal is forwarded to the at least one measurement device via at least one of the at least two channels. Further, the method comprises the step of measuring at least one RF signal parameter by means of the at least one measurement device. In addition, the method comprises the step of controlling at least one switch unit by at least one control unit, wherein the switch unit switches between the at least two channels, wherein the at least two channels are configured to provide RF signal components of the RF signal captured on different polarizations such that a polarization switching is done during operation of a mobile platform. The mobile platform carries the at least one antenna, the at least one measurement device, the at least one switch unit, and the at least one control unit, wherein the mobile platform is any of an unmanned aerial vehicle, a balloon, a vehicle, a plane, a boat or a train. Moreover, the method comprises the step of performing at least two measurements of the at least one RF signal parameter at different polarizations.

This improves the repeatability of the measurements at different polarizations, e.g. at a stationary position or in a given time window, since the polarization used for measurement can be set in a controlled manner. This allows faster measurement cycles since the switching from a first polarization to a second polarization can be initiated immediately the first polarization measurement has been completed. In addition, this also reduces the equipment costs as no mechanical motors have to be provided to move the orientation of antenna. Furthermore, the elimination (in the sense of not implementing them in the first place) of motor components allows the reduction of manufacturing costs.

Additionally, this increases the lifetime of equipment as moving parts of any kind are most certainly always adversely affected by the environment at operation site. A next advantage is that the elimination of these motor and respective control parts reduce weight, improve the maneuverability of any mobile platform the respective system may be implemented at and increases a battery lifetime.

Thus, the present invention allows for a huge variety of improvements over the prior art.

Radio frequency (abbr.: RF) signals are commonly used in communication and broadcasting. The RF spectrum typically covers the frequencies from 3 Hz to 3000 GHz (3 THz) and forms a part of the electromagnetic spectrum. In broadcasting and telecommunication modulation of the phase, frequency and intensity or power can be used to encode information onto the RF signal (spectrum). Any of the characteristic parameters of an electromagnetic wave in this respective spectral window can be an RF signal parameter in the sense of the described solution to the above problem. As matter of example only, these parameters may by any of a spectrum, an intensity, a power, a power spectrum, a polarization of the wave vector, isolated frequencies. RF waves are collected by the at least one antenna. To do so, it is essential that the polarization of the antenna aligns (as good as possible) with the polarization of the electromagnetic wave in the RF spectral window.

In general, the RF signal captured by the at least one antenna will be forwarded to the at least one measurement device by at least one of the at least two channels which can be individually switched to according to the control unit that controls the at least one switch unit. Hence, the switch unit may be controlled such that the first channel is connected with the at least one measurement device, thereby ensuring that only the RF signal component is forwarded to the measurement device that is associated with the first channel. Subsequently or alternatively, the switch unit may be controlled such that the second channel is connected with the at least one measurement device, thereby ensuring that only the RF signal component is forwarded to the measurement device that is associated with the second channel. Accordingly, two different polarizations can be measured.

According to an aspect, the RF measurement method is performed on a mobile platform wherein the location of the mobile platform is kept constant over the at least two measurements and/or wherein the at least two measurements are performed at the (substantially) same moment in time. This allows to transfer the respective effects mentioned above to non-stationary platforms and increases the flexibility of RF measurements as drones and other UAVs can be used to measure at least one RF signal parameter at nearly any given location and time. Complex and costly constructions of buildings are not necessary. This drastically increases the flexibility of application and thus increases the adaptability of RF measurement schemes.

The location of the mobile platform is kept constant over the at least two measurements. This represents the capability of the mobile platform to stay at a certain given location with respect to a set frame. This set frame may be an earth surface frame, a cartesian coordinate system where at least two of the dimensions span a tangential plane to the earth's surface. Alternatively, the reference frame may be a satellite frame, a cartesian coordinate system placed in a respective satellite of interest or an earth center frame, a cartesian coordinate system placed at the earth center, where one dimension crosses the geographic northern pole. "Kept constant" is to be understood such that the mobile platform does not actively (or passively) change location to perform a change of polarization. Furthermore, drifting of the mobile platform is avoided and/or counteracted. This allows to measure the respective RF signal parameter with high local precision and repeatability. This allows to track the given RF field and particularly any changes therein that do not result from geographical or other changes in local position.

Alternatively and additionally, the at least two measurements may be performed at the (substantially) same moment in time. The measurements are not performed simultaneously, though. The term "at the same moment in time" is to be understood such that the respective measurement routine may not be disturbed e.g., by landing the drone to manually change the polarization. Instead, the measurement is ongoing continuously as no orientation changes of the antenna have to be performed (manually or motor controlled) either. Furthermore, the electronically controlled switch as it is described in detail above allows to switch the measurement (and thus the analysis) of the collected RF at distinct polarizations electronically. The (substantially) same moment in time refers to the respective time frame of this electronic switching.

At the substantially same moment in time means that only the respective measurement time and the time required for performing the switchover by means of the switch unit result in a time deviation of the measurement of the different polarizations, which however can be neglected. However, the switchover can be done without leaving the respective location, namely at the same location at which the first measurement has been done, e.g. the measurement of the first polarization.

Another aspect provides that the at least one control unit is controlled by means of a radio signal received such that the switch unit is controlled remotely. Hence, an external source may provide control signals for starting the respective measurements, particularly the switchover to be performed by the switch unit. The external source may send the radio signal that is received by a receiver that is connected to the control unit such that the radio signal received is processed by the control unit which in turn controls the switch unit. Accordingly, the switch unit is controlled remotely by means of the radio signal received from the external source. In other words, a remote control is established.

Particularly, an in-flight switching is performed of a mobile platform. The platform may correspond to an UAV that comprises the at least one antenna, the control unit, the switch unit and the at least one measurement device. During operation of the platform means that the platform is operated, e.g. performing the RF measurements. In case of an UAV, during operation means that the UAV is flying. Therefore, the respective switching of the polarization used for measurement purposes is done during the flight. Hence, an in-flight switching is done.

Further, the captured radio frequency signal being measured may be a communication signal and/or a broadcasting signal. The respective signal may be a signal that typically interferes with controlling signals of a UAV or other signals used, for instance communication signals at an airport. Therefore, the RF measurements may be done in order to identify interfering signals of a wanted signal or rather to generally obtain an overview of the signals present in an RF environment.

After performing the at least two measurements of the at least one radio frequency signal parameter at different polarizations, a further measurement is done, particularly at a different location, on a different frequency band and/or with different measurement settings. The platform may be moved to another location for performing the same measurements, e.g. at least two polarizations with the same measurement settings. However, the further measurements may be done at the same location, e.g. on a different frequency band and/or with different measurement settings, thereby obtaining a deeper insight.

Furthermore, the invention relates to an RF measurement system, particularly for automatic changing of polarization. The system comprises at least one antenna configured to capture at least one RF signal. The system also comprises at least two channels connected with the at least one antenna, wherein the at least two channels provide radio frequency signal components of the radio frequency signal captured on different polarizations. Further, the system comprises at least one measurement device configured to measure at least one RF signal parameter from the RF signal. Moreover, the system has at least one switch unit located between the at least two channels and the at least one measurement device. Further, the system comprises at least one control unit configured to control the switch unit such that the switch unit switches between the at least two channels, thereby connecting one of the at least two channels to the at least one measurement device. The system is configured to perform at least two measurements of the at least one RF signal parameter at different polarizations. The system comprises a mobile platform that carries the at least one antenna, the at least one measurement device, the at least one switch unit, and the at least one control unit. The mobile platform is any of an unmanned aerial vehicle, a balloon, a vehicle, a plane, a boat or a train

In fact, the system is configured to perform a radio frequency (RF) measurement method comprising the steps as described in detail above. Therefore, the same advantages, characteristics and definitions apply to the system respectively. Furthermore, as the method is implemented by a system described here and in the following, the same advantages, characteristics and definitions of the system apply to the method and vice versa. Accordingly, all advantages, characteristics and definitions given throughout the description describe all aspects of the invention independent of their respective category "system" or "method".

Since the switch unit is controlled by means of the control unit so as to connected one of the at least two channels to the measurement device in order to perform a measurement on a specific polarization, an automatic changing of polarization is ensured. In fact, different polarizations can be measured by changing the channel connected with the measurement. Device via the switch unit, which depends on the switching position of the switch unit. Therefore, the "automatic changing of polarization" is to be understood in that no manual change of polarization has to be performed and the respective system does not have to be landed, stranded, parked, stopped or its operation to be interrupted in order to perform the respective change of polarization.

Furthermore, as no motors are deployed at the respective system, no sand, grains, water, dust, fog, ice, or any hazardous material or substance is capable to penetrate joints of the respective moving parts. This increases the respective lifetime of the equipment drastically.

Control signals used by the control unit are in particular provided as transistor-transistor-logic signals (TTL signals). The control signals trigger the automatic change of polarization used for measurement by controlling the switching position of the switch unit accordingly.

Therefore, the respective components used for performing the method or rather the components of the system may be implemented on the mobile platform. This ensures that the respective measurements can be done at different locations.

According to another aspect, a receiver is provided that is configured to receive a radio signal from a remote source. The receiver receives the radio signal from the external source, e.g. the remote source. The radio signal is internally processed by means of the control unit which in turn controls the switch unit. This allows to access and control the switch unit remotely, namely by means of the radio signal issued by the remote/external source.

In other words, the radio signal may relate to a pre-control signal that is transmitted to the receiver connected to the control unit that converts the pre-control signal into the respective control signal for the switch unit. These control signals allow the switchover of the respective polarization as already explained in detail.

According to another aspect, the captured RF signal being measured is a communication signal and/or a broadcasting signal. The invention can be applied for the most common use cases in the RF measurement analysis. Therefore, the invention is relevant for a broad technical field with multiple applications.

The broadcasting and the communication may both show signs of disturbances. In these cases it can be beneficial to check for the respective condition of these frequency bands at a given location and time. This allows broadcasting and telecommunication companies to provide checks for the potential issues with respect to their services. Furthermore, airport operators or operators of other infrastructure may be enabled to verify any disturbing signals in the radio frequency environment.

According to an embodiment, the switch unit comprises a single-pole multiple-throw switch (SPMT switch). Hence, the switching position of the SPMT switch may be controlled accordingly by means of the control unit. This allows a fast switching between different polarizations associated with the channels connected to the switch unit, particularly in a fully automated manner, without interruptions of the measurement routine as described above and without any moving of respective antennas.

According to another embodiment, at least one antenna is a single antenna with more than one polarization and/or multiple antennas are provided. This allows assembling the antennas according to the demands of the respective application without any limitations by the respective system or method.

In case multiple antennas are used, each of the multiple antennas may be connected with a dedicated channel in an unambiguous manner. Put differently, each antenna has one output interface via which the respective antenna is connected to a dedicated channel. However, at least one of the multiple antennas may be an antenna having more than one polarization such that this specific antenna may have two or more output interfaces which each are connected to a dedicated channel. In any case, it is possible to switch between, particularly in form of cycling through, several polarizations in a fast manner. This further speeds up the measurement time, increases the variability of the system and allows measuring an increasing amount of polarizations (depending on the amount of antennas used and their respective polarization).

In case a single antenna is used, the single antenna is a dual-polarized antenna or even a multi-polarized antenna. In any case, the single antenna is connected to the at least two channels. Hence, the single antenna has at least two output interfaces via which the single antenna is connected to the at least two channels. Accordingly, it can be indeed possible to separate two distinct polarization contributions to the total RF signal.

According to an embodiment, the at least one antenna comprises a horn antenna or a monopole antenna.

Horn antennas generally use a flared metal waveguide to direct radio waves in a beam. They can both send and receive a wide range of frequencies and do this in an oriented fashion. Furthermore, one advantage is that they contribute to a better transition of RF radiation from air space to vacuum for emission as well as reception. Thus, horn antennas have a wide bandwidth and a 10:1 ratio like 1 GHz to 10 GHz are common with a 20:1 ratio being possible. Furthermore, they are easy to build and thus cost effective. In addition, they are easy to handle as it is easy to connect them to a waveguide and they further can be connected to a coaxial feeder. Horn antenna come in many sizes and shapes, such as a pyramidal horn antenna, an exponential horn antenna, a scalar horn antenna, a corrugated horn antenna.

Monopole antennas can be designed at low cost and small-size printed monopole antennas are possible. Monopole antennas, particularly printed monopole antennas can exhibit several, e.g. five resonant frequencies and they may be designed such that they cover the desired frequency bands for mobile and WLAN operations.

According to an embodiment, the at least one antenna comprises an omnidirectional antenna. An omnidirectional antenna brings the advantage that it can receive RF signals omnidirectionally (from virtually all directions). Therefore, the respective device comprising a respective omnidirectional can roam across various base stations, e.g. broadcasting stations or telecommunication station in any direction. This generally allows to measure respective RF signals independent from their direction.

According to an embodiment, the at least one antenna comprises a directional antenna. Implementing a directional antenna ensures to scan a very specific direction into which the directional antenna is facing.

An interference detection unit may be provided that allows to determine by switching through the respective channels that some of RF measurements are jammed, e.g. by interference in omnidirectional antenna. In this situation, the system may switch to measurements based on the respective directional antenna to reduce the interference noise if possible.

Generally, multiple antennas may be provided, wherein the multiple antennas may comprise antennas of different types, for instance a monopole antenna and an omnidirectional antenna.

For instance, the system has an operation mode in which the mobile platform is operated and the measurements are performed. The location of the platform is kept constant over the at least two measurements and/or the system is configured to perform the at least two measurements at substantially the same moment in time. Hence, the mobile platform is operated while the measurements are performed, which means that the mobile platform may be flying when the measurements are performed. This allows to transfer the respective effects mentioned above to non-stationary platforms and increases the flexibility of RF measurements as the mobile platform can be used to measure the at least one RF signal parameter at nearly any given location and time. Complex and costly constructions of buildings are not necessary. This drastically increases the flexibility of application and thus increases the adaptability of RF measurement schemes.

According to the invention, the mobile platform is any of an unmanned aerial vehicle, a balloon, a vehicle, a plane, a boat or a train. Therefore, the respective invention is not limited to a certain type of mobile platform and the advantages as described throughout the description in detail can be transferred to many different mobile platforms. This way it is possible to adapt the system to the respective needs on land, sea and up in the air.

The invention further relates to a computer program that comprises program code instructions being adapted to cause a radio frequency measurement system to run the method according to the previously described aspects, when the computer program is executed on a processing unit of the radio frequency measurement system. In fact, the processing unit may interact with the control unit and the measurement device such that the respective program code instructions cause the control unit to control the switch unit appropriately while the program code instructions also cause the measurement device to perform the respective measurement(s).

In between the measurements, the system, particularly the processing unit, can reconfigure the switch unit to select the next channel associated with another polarization.

When the measurement has been carried out on all desired polarizations, the next measurement (e.g. at a different location or on a different frequency band or with a different measurement settings) can be carried out on all desired polarizations.

The method, the system and the software allow in-flight switching between different polarizations during operation of the system, particularly the mobile platform like an UAV, for instance a drone. Thus, a solution to the respective technical problems as stated above is provided.

As already mentioned above, the at least one antenna can be provided on an unmanned aerial vehicle (abbr.: UAV) or comparable mobile platform, wherein the UAV is particularly equipped with multiple antennas at different polarizations or at least one or multiple dual-polarized antennas or a combination of all of these types of antennas, particularly into an antenna array.

In cases where only a single dual-polarized or multi-polarized antenna is provided, the antenna provides at least two different output interfaces connected to the at least two channels to provide the signals measured at distinct polarizations and/or polarization combinations (linear combinations).

Antenna connectors are connected to the switch unit, in particular any of a single-pole double-throw (abbr.: SPDT) switch, single-pole four-throw (abbr.: SP4T) switch or a single-pole multiple-throw (abbr.: SPMT) switch. The switch unit is controlled by the control unit, for instance a computer (unit) output, e.g. in form of TTL signals. The switch unit is designed such that it allows to switch the transmission of signals which are collected by the respective multiplicity (of at least two distinct) antennas selectively towards the measurement device wherein the respective at least one RF signal parameter is measured. The number of channels is particularly represented as distinct connectors to the switch, wherein each channel can provide a signal measured at a distinct (and linearly independent) polarization collected by a single polarized antenna. Dual-polarized or multiple-polarized antennas may provide extra channels (in form of port connections) to provide isolated polarizations accordingly via distinct channels.

Further, the respective number of channels and port connections and the design of the SPMT switch can be made such that each channel transfers the signals measured at a single polarization measured by a single antenna or measured by a multiplicity of antenna or by antenna capable itself to measure multiple polarizations. In particular, each channel or connector transfers the signal measured at a single polarization independent of the way these signals at a single polarization are measured e.g., by a single antenna capable to collect several polarizations or by multiple antennas wherein each channel forwards signals from a single polarization only.

Generally, the respective features characterizing either of these categories and/or embodiments within the respective category allow to characterize the respective other category and/or embodiment.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a radio frequency (RF) measurement according to the invention in a radio frequency environment, and
- Figure 2 schematically shows a detail overview of the radio frequency (RF) measurement system according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter of the precise forms disclosed.

For the purpose of the present disclosure, the phrase "at least one of A, B and C", for example, means (A), (B), (C), (A and B), (A and C), (B and C), or (A, B and C), including all further possible permutations when more than three elements are listed. In other words, the term "at least one of A and B" generally means "A and/or B", namely "A" alone, "B" alone or "A and B".

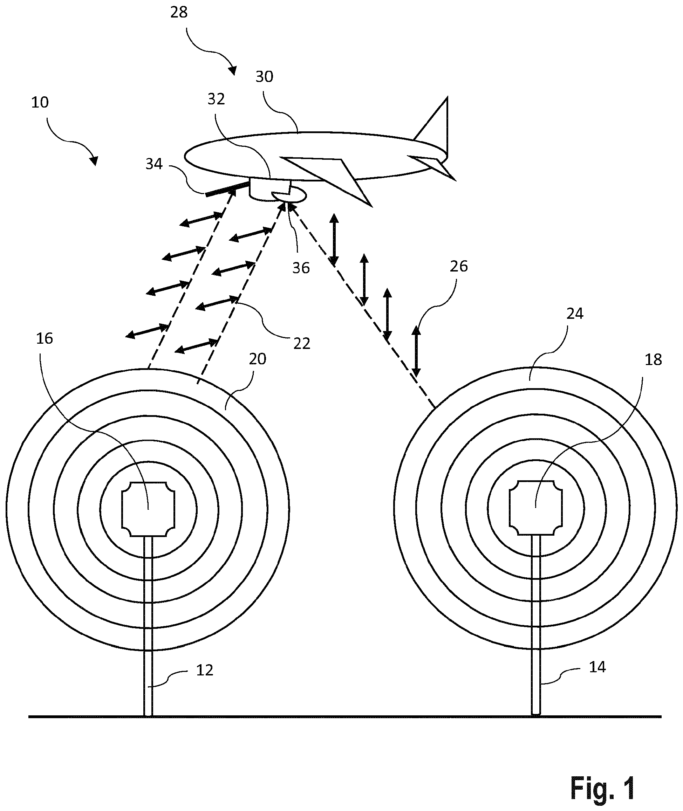

Figure 1 schematically shows a radio frequency environment 10.

The radio frequency (RF) environment 10 comprises a first base station 12 and a second base station 14, which comprise a first RF emitter 16 and second RF emitter 18, respectively. The first RF emitter 16 emits a first RF signal 20 having a first polarization 22, whereas the second RF emitter 18 emits a second RF signal 24 having a second polarization 26. The first and second polarizations 22, 26 are different from each other.

Here, a linear polarization is indicated for both RF electric field vectors associated with the RF signals 20, 24.

Nevertheless, also circular polarization and other polarization schemes can be implemented.

The radio frequency signals 20, 24 may relate to communication signals and/or broadcasting signal.

Furthermore, a radio frequency (RF) measurement system 28 is shown that comprises a mobile platform 30 being implemented by a unmanned aerial vehicle (UAV) like a drone in the shown embodiment.

Generally, the RF measurement system 28 is configured to measure the RF signals 20, 24 based on the respective different polarizations 22, 26.

For this purpose, the system 28, particularly the mobile platform 30, comprises at least one antenna 32. In the shown embodiment, an antenna array is provided that comprises two different types of antennas, for instance a linearly single polarized antenna 34 and a dual-polarized antenna 36.

Generally, the RF measurement system 28 may comprise only one single antenna having more than one polarization, e.g. one single dual-polarized antenna. Alternatively, the RF measurement system 28 may also comprise several antennas having one polarization. In any case, the at least one antenna 32, e.g. the single antenna or rather the multiple antennas, ensure that two or more polarizations may be taken into account.

In line of sight from the first RF emitter 16 to the first singularly polarized antenna 34 and if the single polarized antenna 34 is aligned with the polarization 22 of the RF field of the first RF signal 20, a measurement of at least one RF signal parameter is possible.

In line of sight from the first RF emitter 16 to the dual-polarized antenna 36 and if the dual-polarized antenna 36 is aligned with the polarization 26 of the RF field of the second RF signal 24, a measurement of at least one RF signal parameter is possible.

Alternatively, the first RF signal 20 could be measured by the dual-polarized antenna 36 if line of sight allows it and the first polarization 22 matches those of the dual-polarized antenna 36.

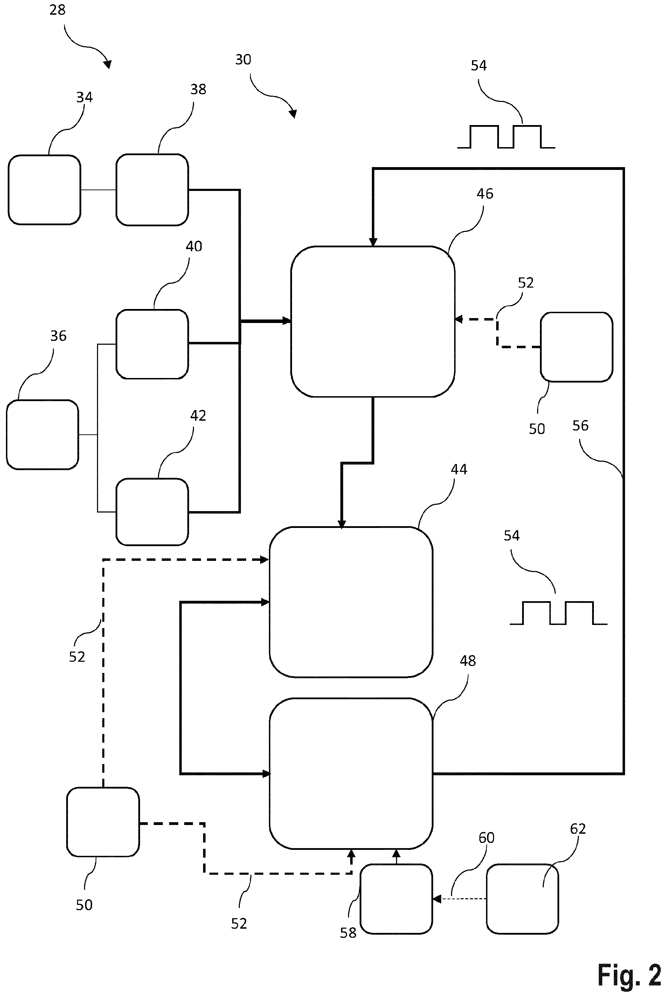

Generally, the RF measurement system 28 is enabled to perform measurements on the RF environment 10, e.g. the two differently polarized RF signals 20, 24 as will be described hereinafter with reference to Figure 2 that shows a detail overview of the respective components of the RF measurement system 28.

Figure 2 schematically shows a layout of the RF measurement system 28 according to a specific embodiment as implemented on the mobile platform 30, e.g. an unmanned aerial vehicle.

The RF measurement system 28 comprises at least two different channels 38, 40, 42, which are connected to the at least one antenna 32, namely the single-polarized antenna 34 and the dual-polarized antenna 36 which have respective output interfaces. In fact, the first channel 38 is associated with the single-polarized antenna 34, whereas the second channel 40 and the third channel 42 are associated with the dual-polarized antenna 36.

Moreover, the RF measurement system 28 comprises a measurement device 44 that is used for performing measurements of RF signal parameters of the RF signals 20, 24 received via the at least one antenna 32.

The measurement device 44 is connected to the at least one antenna 32, particularly the channels 38, 40, 42 originating from the at least one antenna 32, via a switch unit 46 that is also implemented on the mobile platform 30. In the shown embodiment, the switch unit 46 is implemented by a single-pole multiple-throw switch (SPMT switch).

Accordingly, RF signals via the at least one antenna 32, particularly the differently polarized antennas 34, 36, are routed via the channels 38, 40, 42 and the switch unit 46 to the measurement device 44 such that the measurement device 44 is enabled to perform respective measurements of the at least one RF signal parameter.

Depending on the switching position of the switch unit 46, one of the respective channels 38, 40, 42 is connected with the measurement device 44 via the switch unit 46 such that a respective RF signal component of the radio frequency signal captured by means of the at least one antenna 32 on a respective polarization is forwarded to the measurement device 44.

Furthermore, the RF measurement system 28 comprises a control unit 48 that is connected with the switch unit 46. The control unit 48 is configured to control the switch unit 46, thereby setting the respective switching position of the switch unit 46. Hence, the control unit 48 is enabled to switch between the different channels 38, 40, 42 so as to set which of the RF signal component is forwarded to the measurement device 44.

The control unit 48 is also connected with the measurement device 44, particularly in a bi-directional manner.

Hence, the control unit 48 obtains information once the measurement device 44 has finished a measurement of the RF signal parameter at a specific polarization. Then, the control unit 48 may control the switch unit 46 appropriately to switch to the next channel, thereby enabling the measurement device 44 to perform a next measurement of the RF signal parameter at a further polarization. In addition, the control unit 48 may also control the measurement device 44 accordingly in order to initiate the respective measurement.

Furthermore, the control unit 48 may distribute the information, e.g. measurement results, obtained from the measurement device 44.

Generally, the control unit 48 may be established by means of a computer which is powered by a power supply 50 linked via power lines 52.

Furthermore, the power supply 50 also powers the measurement device 44 and the switch unit 46.

The computer, e.g. the control unit 48, outputs control signals 54 to the switch unit 46 via signal line 56, e.g. in form of a TTL signal as indicated.

Based on the control signal 54, the switch unit 46 is capable to switch between several antenna ports, e.g. output interfaces of the antennas 34, 36. Then, the dedicated channel 38, 40, 42 associated with the respective antenna port, namely output interface, is connected with the measurement device 44 for measuring the respective polarization 22, 26 as obtained by the respective antenna 34, 36, namely the single-polarized antenna 34 or the dual-polarized antenna 36.

Then, the measurement device 44 collects the respective RF signal component from the respectively selected antenna port or rather channel 38, 40, 42. The measurement device 44 collects and processes the respective data, namely the RF signal component(s), to allow for an analysis of a RF signal parameter.

After the processing, the measurement device 44 may forward a trigger to the control unit 48, thereby indicating that the respective measurement has been finished. Thus, the control unit 48 controls the switch unit 46 to change its switching position in order to forward the RF signal components of another channel 38, 40, 42 via the switch unit 46 to the measurement device 44.

In other words, an algorithm running on the control unit 48 determines the necessity to switch between polarizations 22, 26. Accordingly, the control unit 48 provides the respective control signal 54 to the switch unit 46, e.g. the SPMT switch, to switch from one channel 38, 40, 42 to another channel 38, 40, 42.

This ensures that the measurement device 44 is enabled to perform another measurement of the RF signal on another polarization since the channels 38, 40, 42 may be associated to different polarizations.

Generally, the mobile platform 30, e.g. the drone, may be operated during the respective switch over of the polarization, which may concern a respective operation mode of the RF measurement system 28. Hence, no stopping or landing of the mobile platform 30 is necessary, which ensures that the location of the mobile platform 30 is kept constant over the at least two measurements of the different polarizations. In fact, this is called in-flight switching, as the polarization switching is done during operation of the mobile platform 30.

Since the polarization switchover is done during the operation of the mobile platform 30, the at least two measurements of the different polarizations are performed at the substantially same moment in time.

After the measurements of the different polarizations at the same location and/or the substantially same moment in time have been done, a new measurement may be performed, for instance at the same location, but with different measurement settings and/or on a different frequency band. Moreover, the mobile platform 30 may be moved to a different location where two measurements of different polarizations 22, 26 are performed again.

In addition, a remote control may be established. For this purpose, the RF measurement system 28 comprises a receiver 58 that is connected with the control unit 48. The receiver 58 receives radio signals 60 from a remote source 62, wherein the radio signals 60 are processed by the control unit 48 such that a switching operation may be initiated.

Accordingly, the switchover may be controlled remotely by means of the remote source 62 sending radio signals 60 to be received by the receiver 58.

In the shown embodiment, the RF measurement system 28 comprises the mobile platform 30 that is established by the drone. However, the RF measurement system 28 may also be established by several components that are not implemented on a specific platform. Moreover, the respective components may also be implemented on another mobile platform than a drone, for instance a balloon, a vehicle, a plane, a boat or a train.

The at least one antenna 32 of the RF measurement system 28 may comprise a horn antenna, a monopole antenna, an omni-directional antenna, and/or a directional antenna. Depending on the respective kind of implementation of the RF measurement system 28 and its dedicated application, different antennas may be used.

As already mentioned above, the computer on which the control unit 48 is implemented, e.g. the respective processing unit of the computer, may also be used to execute a computer program. The computer program comprises program code instructions adapted to cause the radio frequency measurement system 28 to perform the respective steps mentioned above, when the computer program is executed on a processing unit, e.g. the one of the computer, of the radio frequency measurement system 28.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A radio frequency, RF, measurement method comprising the steps of:
- capturing a radio frequency signal (20, 24) with at least one antenna (32) that is connected to at least one measurement device (44) via at least two channels (38, 40, 42),
- measuring at least one radio frequency signal parameter by means of the at least one measurement device (44),
- controlling at least one switch unit (46) by at least one control unit (48), wherein the switch unit (46) switches between the at least two channels (38, 40, 42), wherein the at least two channels (38, 40, 42) are configured to provide radio frequency signal components of the radio frequency signal captured on different polarizations (22, 26) such that a polarization switching is done during operation of a mobile platform (30) that carries the at least one antenna (32), the at least one measurement device (44), the at least one switch unit (46), and the at least one control unit (48), wherein the mobile platform (30) is any of an unmanned aerial vehicle, a balloon, a vehicle, a plane, a boat or a train, and
- wherein the mobile platform performs at least two measurements of the at least one radio frequency signal parameter at different polarizations (22, 26).

2. The radio frequency measurement method according to claim 1, **characterized in that** the method being performed on a mobile platform (30) wherein the location of the mobile platform (30) is kept constant over the at least two measurements and/or wherein the at least two measurements are performed at the substantially same moment in time, wherein at substantially the same moment in time means that only the respective measurement time and the time required for performing the switchover by means of the switch unit result in a time deviation of the measurements of the different polarizations.

3. The radio frequency measurement method according to claim 1 or 2, **characterized in that** the at least one control unit (48) is controlled by means of a radio signal received such that the switch unit (46) is controlled remotely.

4. The radio frequency measurement method according to any of the preceding claims, **characterized in that** an in-flight switching is performed of the mobile platform (30).

5. The radio frequency measurement method according to any of the preceding claims, **characterized in that** the captured radio frequency signal being measured is a communication signal and/or a broadcasting signal.

6. The radio frequency measurement method according to any of the preceding claims, **characterized in that**, after performing the at least two measurements of the at least one radio frequency signal parameter at different polarizations (22, 26), a further measurement is done on a different frequency band and/or with different measurement settings.

7. A radio frequency, RF, measurement system (28) comprising:
at least one antenna (32) configured to capture at least one radio frequency signal (20, 24),
at least two channels (38, 40, 42) connected with the at least one antenna (32), wherein the at least two channels (38, 40, 42) provide radio frequency signal components of the radio frequency signal captured on different polarizations (22, 26),
at least one measurement device (44) configured to measure at least one radio frequency signal parameter from the radio frequency signal,
at least one switch unit (46) located between the at least two channels (38, 40, 42) and the at least one measurement device (44),
at least one control unit (48) configured to control the switch unit (46) such that the switch unit (46) switches between the at least two channels (38, 40, 42), thereby connecting one of the at least two channels (38, 40, 42) to the at least one measurement device (44),
wherein a mobile platform (30) is configured to perform at least two measurements of the at least one radio frequency signal parameter at different polarizations (22, 26),
the system (28) comprises the mobile platform (30) that carries the at least one antenna (34, 36), the at least one measurement device (44), the at least one switch unit (46), and the at least one control unit (48), wherein the mobile platform (30) is any of an unmanned aerial vehicle, a balloon, a vehicle, a plane, a boat or a train.

8. The system (28) according to claim 7, **characterized in that** a receiver (58) is provided that is configured to receive a radio signal (60) from a remote source (62).

9. The system (28) according to claim 7 or 8, **characterized in that** the switch unit (46) comprises a single-pole multiple-throw, SPMT, switch.

10. The system (28) according to any of the claims 7 to 9, **characterized in that** the at least one antenna (32) is a single antenna (36) with more than one polarization (22, 26) and/or **in that** multiple antennas (34, 36) are provided.

11. The system (28) according to any of the claims 7 to 10, **characterized in that** the at least one antenna (32) comprises a horn antenna, a monopole antenna, an omni-directional antenna, and/or a directional antenna.

12. The system according to any of the claims 7 to 11, wherein the system (28) has an operation mode in which the mobile platform (30) is operated and the measurements are performed, wherein the location of the mobile platform (30) is kept constant over the at least two measurements and/or wherein the system (28) is configured to perform the at least two measurements at substantially the same moment in time, wherein at substantially the same moment in time means that only the respective measurement time and the time required for performing the switchover by means of the switch unit result in a time deviation of the measurements of the different polarizations.

13. A computer program comprising program code instructions being adapted to cause a radio frequency measurement system (28) to perform the method according to any one of claims 1 to 6, when the computer program is executed on a processing unit of the radio frequency measurement system (28).

## Patentansprüche

1. Funkfrequenzmessverfahren, RF-Messverfahren, umfassend die Schritte:
- Erfassen eines Funkfrequenzsignals (20, 24) mit mindestens einer Antenne (32), die über mindestens zwei Kanäle (38, 40, 42) mit mindestens einer Messvorrichtung (44) verbunden ist,
- Messen mindestens eines Funkfrequenzsignalparameters mittels der mindestens einen Messvorrichtung (44),
- Steuern mindestens einer Schalteinheit (46) durch mindestens eine Steuereinheit (48), wobei die Schalteinheit (46) zwischen den mindestens zwei Kanälen (38, 40, 42) schaltet, wobei die mindestens zwei Kanäle (38, 40, 42) konfiguriert sind, um Funkfrequenzsignalkomponenten des Funkfrequenzsignals bereitzustellen, die auf unterschiedlichen Polarisationen (22, 26) erfasst werden, derart, dass eine Polarisationsschaltung während eines Betriebs einer mobilen Plattform (30) erfolgt, die die mindestens eine Antenne (32), die mindestens eine Messvorrichtung (44), die mindestens eine Schalteinheit (46) und die mindestens eine Steuereinheit (48) trägt, wobei die mobile Plattform (30) eines von einem unbemannten Luftfahrzeug, einem Ballon, einem Fahrzeug, einer Ebene, einem Boot oder einem Zug ist, und
- wobei die mobile Plattform mindestens zwei Messungen des mindestens einen Funkfrequenzsignalparameters bei unterschiedlichen Polarisationen (22, 26) durchführt.

2. Funkfrequenzmessverfahren nach Anspruch 1,
**dadurch gekennzeichnet, dass** das Verfahren auf einer mobilen Plattform (30) durchgeführt wird, wobei die Position der mobilen Plattform (30) über die mindestens zwei Messungen konstant gehalten wird und/oder wobei die mindestens zwei Messungen im Wesentlichen zu dem gleichen Zeitpunkt durchgeführt werden, wobei im Wesentlichen zu dem gleichen Zeitpunkt bedeutet, dass nur die jeweilige Messzeit und die Zeit, die zum Durchführen der Umschaltung mittels der Schalteinheit erforderlich ist, zu einer zeitlichen Abweichung der Messungen der unterschiedlichen Polarisationen führen.

3. Funkfrequenzmessverfahren nach Anspruch 1 oder 2,
**dadurch gekennzeichnet, dass** die mindestens eine Steuereinheit (48) mittels eines Funksignals gesteuert wird, dass derart empfangen wird, dass die Schalteinheit (46) ferngesteuert wird.

4. Funkfrequenzmessverfahren nach einem der vorstehenden Ansprüche, **dadurch gekennzeichnet, dass** eine Schaltung während des Flugs der mobilen Plattform (30) durchgeführt wird.

5. Funkfrequenzmessverfahren nach einem der vorstehenden Ansprüche, **dadurch gekennzeichnet, dass** das erfasste Funkfrequenzsignal, das gemessen wird, ein Kommunikationssignal und/oder ein Rundfunksignal ist.

6. Funkfrequenzmessverfahren nach einem der vorstehenden Ansprüche, **dadurch gekennzeichnet, dass,** nach dem Durchführen der mindestens zwei Messungen des mindestens einen Funkfrequenzsignalparameters bei unterschiedlichen Polarisationen (22, 26), eine weitere Messung in einem unterschiedlichen Frequenzband und/oder mit unterschiedlichen Messeinstellungen durchgeführt wird.

7. Funkfrequenzmesssystem, RF-Messsystem (28), umfassend:
mindestens eine Antenne (32), die konfiguriert ist, um mindestens ein Funkfrequenzsignal (20, 24) zu erfassen,
mindestens zwei Kanäle (38, 40, 42), die mit der mindestens einen Antenne (32) verbunden sind, wobei die mindestens zwei Kanäle (38, 40, 42) Funkfrequenzsignalkomponenten des Funkfrequenzsignals bereitstellen, die auf unterschiedlichen Polarisationen (22, 26) erfasst werden,
mindestens eine Messvorrichtung (44), die konfiguriert ist, um mindestens einen Funkfrequenzsignalparameter aus dem Funkfrequenzsignal zu messen,
mindestens eine Schalteinheit (46), die sich zwischen den mindestens zwei Kanälen (38, 40, 42) und der mindestens einen Messvorrichtung (44) befindet,
mindestens eine Steuereinheit (48), die konfiguriert ist, um die Schalteinheit (46) derart zu steuern, dass die Schalteinheit (46) zwischen den mindestens zwei Kanälen (38, 40, 42) schaltet, wodurch einer der mindestens zwei Kanäle (38, 40, 42) mit der mindestens einen Messvorrichtung (44) verbunden wird,
wobei eine mobile Plattform (30) konfiguriert ist, um mindestens zwei Messungen des mindestens einen Funkfrequenzsignalparameters bei unterschiedlichen Polarisationen (22, 26) durchzuführen, das System (28) die mobile Plattform (30) umfasst, die die mindestens eine Antenne (34, 36), die mindestens eine Messvorrichtung (44), die mindestens eine Schalteinheit (46) und die mindestens eine Steuereinheit (48) trägt, wobei die mobile Plattform (30) ein beliebiges von einem unbemannten Luftfahrzeug, einem Ballon, einem Fahrzeug, einer Ebene, einem Boot oder einem Zug ist.

8. System (28) nach Anspruch 7, **dadurch gekennzeichnet, dass** ein Empfänger (58) bereitgestellt ist, der konfiguriert ist, um ein Funksignal (60) von einer entfernten Quelle (62) zu empfangen.

9. System (28) nach Anspruch 7 oder 8, **dadurch gekennzeichnet, dass** die Schalteinheit (46) einen einpoligen Mehrfachwechselschalter, SPMT-Schalter, umfasst.

10. System (28) nach einem der Ansprüche 7 bis 9,
**dadurch gekennzeichnet, dass** die mindestens eine Antenne (32) eine einzelne Antenne (36) mit mehr als einer Polarisation (22, 26) ist und/oder dass mehrere Antennen (34, 36) bereitgestellt sind.

11. System (28) nach einem der Ansprüche 7 bis 10,
**dadurch gekennzeichnet, dass** die mindestens eine Antenne (32) eine Hornantenne, eine Monopolantenne, eine omnidirektionale Antenne und/oder eine Richtantenne umfasst.

12. System nach einem der Ansprüche 7 bis 11, wobei das System (28) einen Betriebsmodus aufweist, in dem die mobile Plattform (30) betrieben wird und die Messungen durchgeführt werden, wobei die Position der mobilen Plattform (30) über die mindestens zwei Messungen konstant gehalten wird und/oder wobei das System (28) konfiguriert ist, um die mindestens zwei Messungen im Wesentlichen zu dem gleichen Zeitpunkt durchzuführen, wobei im Wesentlichen zu dem gleichen Zeitpunkt bedeutet, dass nur die jeweilige Messzeit und die Zeit, die zum Durchführen der Umschaltung mittels der Schalteinheit erforderlich ist, zu einer zeitlichen Abweichung der Messungen der unterschiedlichen Polarisationen führen.

13. Computerprogramm, umfassend Programmcodeanweisungen, die angepasst sind, um ein Funkfrequenzmesssystem (28) zu veranlassen, das Verfahren nach einem der Ansprüche 1 bis 6 durchzuführen, wenn das Computerprogramm auf einer Verarbeitungseinheit des Funkfrequenzmesssystems (28) ausgeführt wird.

## Revendications

1. Procédé de mesure de radiofréquence, RF, comprenant les étapes consistant à :
- capturer un signal radiofréquence (20, 24) avec au moins une antenne (32) qui est connectée à au moins un dispositif de mesure (44) par l'intermédiaire d'au moins deux canaux (38, 40, 42),
- mesurer au moins un paramètre de signal radiofréquence au moyen de l'au moins un dispositif de mesure (44),
- commander au moins une unité de commutation (46) par au moins une unité de commande (48), dans lequel l'unité de commutation (46) commute entre les au moins deux canaux (38, 40, 42), dans lequel les au moins deux canaux (38, 40, 42) sont configurés pour fournir des composantes de signal radiofréquence du signal radiofréquence capturé sur des polarisations différentes (22, 26) de telle sorte qu'une commutation de polarisation est faite pendant le fonctionnement d'une plate-forme mobile (30) qui porte l'au moins une antenne (32), l'au moins un dispositif de mesure (44), l'au moins une unité de commutation (46) et l'au moins une unité de commande (48), dans lequel la plate-forme mobile (30) est l'un quelconque parmi un véhicule aérien sans pilote, un ballon, un véhicule, un avion, un bateau ou un train, et
- dans lequel la plate-forme mobile met en œuvre au moins deux mesures de l'au moins un paramètre de signal radiofréquence à des polarisations différentes (22, 26).

2. Procédé de mesure de radiofréquence selon la revendication 1, **caractérisé en ce que** le procédé est mis en œuvre sur une plate-forme mobile (30) dans lequel la localisation de la plate-forme mobile (30) est maintenue constante sur les au moins deux mesures et/ou dans lequel les au moins deux mesures sont mises en œuvre sensiblement au même moment dans le temps, dans lequel sensiblement au même moment dans le temps signifie que seuls le temps de mesure respectif et le temps requis pour la mise en œuvre de la commutation au moyen de l'unité de commutation résultent en une déviation de temps des mesures des polarisations différentes.

3. Procédé de mesure de radiofréquence selon la revendication 1 ou 2, **caractérisé en ce que** l'au moins une unité de commande (48) est commandée au moyen d'un signal radio reçu de telle sorte que l'unité de commutation (46) est commandée à distance.

4. Procédé de mesure de radiofréquence selon l'une quelconque des revendications précédentes, **caractérisé en ce que** l'on met en œuvre une commutation en vol de la plate-forme mobile (30).

5. Procédé de mesure de radiofréquence selon l'une quelconque des revendications précédentes, **caractérisé en ce que** le signal radiofréquence capturé étant mesuré est un signal de communication et/ou un signal de diffusion.

6. Procédé de mesure de radiofréquence selon l'une quelconque des revendications précédentes, **caractérisé en ce que,** après la mise en œuvre des au moins deux mesures de l'au moins un paramètre de signal radiofréquence à des polarisations différentes (22, 26), une mesure supplémentaire est faite sur une bande de fréquence différente et/ou avec des réglages de mesure différents.

7. Système de mesure de radiofréquence, RF, (28) comprenant :
au moins une antenne (32) configurée pour capturer au moins un signal radiofréquence (20, 24),
au moins deux canaux (38, 40, 42) connectés à l'au moins une antenne (32), dans lequel les au moins deux canaux (38, 40, 42) fournissent des composantes de signal radiofréquence du signal radiofréquence capturé sur des polarisations différentes (22, 26),
au moins un dispositif de mesure (44) configuré pour mesurer au moins un paramètre de signal radiofréquence à partir du signal radiofréquence,
au moins une unité de commutation (46) localisée entre les au moins deux canaux (38, 40, 42) et l'au moins un dispositif de mesure (44),
au moins une unité de commande (48) configurée pour commander l'unité de commutation (46) de telle sorte que l'unité de commutation (46) commute entre les au moins deux canaux (38, 40, 42), en connectant de ce fait l'un des au moins deux canaux (38, 40, 42) à l'au moins un dispositif de mesure (44),
dans lequel une plate-forme mobile (30) est configurée pour mettre en œuvre au moins deux mesures de l'au moins un paramètre de signal radiofréquence à des polarisations différentes (22, 26), le système (28) comprend la plate-forme mobile (30) qui porte l'au moins une antenne (34, 36), l'au moins un dispositif de mesure (44), l'au moins une unité de commutation (46) et l'au moins une unité de commande (48), dans lequel la plate-forme mobile (30) est l'un quelconque parmi un véhicule aérien sans pilote, un ballon, un véhicule, un avion, un bateau ou un train.

8. Système (28) selon la revendication 7, **caractérisé en ce que** l'on fournit un récepteur (58) qui est configuré pour recevoir un signal radio (60) en provenance d'une source distante (62).

9. Système (28) selon la revendication 7 ou 8, **caractérisé en ce que** l'unité de commutation (46) comprend un commutateur unipolaire multidirectionnel, SPMT.

10. Système (28) selon l'une quelconque des revendications 7 à 9, **caractérisé en ce que** l'au moins une antenne (32) est une antenne (36) unique avec plus d'une polarisation (22, 26) et/ou **en ce que** de multiples antennes (34, 36) sont fournies.

11. Système (28) selon l'une quelconque des revendications 7 à 10, **caractérisé en ce que** l'au moins une antenne (32) comprend une antenne cornet, une antenne monopôle, une antenne omnidirectionnelle et/ou une antenne directionnelle.

12. Système selon l'une quelconque des revendications 7 à 11, dans lequel le système (28) a un mode de fonctionnement dans lequel la plate-forme mobile (30) est mise en fonctionnement et les mesures sont mises en œuvre, dans lequel la localisation de la plate-forme mobile (30) est maintenue constante sur les au moins deux mesures et/ou dans lequel le système (28) est configuré pour mettre en œuvre les au moins deux mesures sensiblement au même moment dans le temps, dans lequel sensiblement au même moment dans le temps signifie que seuls le temps de mesure respectif et le temps requis pour la mise en œuvre de la commutation au moyen de l'unité de commutation résultent en une déviation de temps des mesures des polarisations différentes.

13. Programme informatique comprenant des instructions de code de programme étant conçues pour amener un système de mesure de radiofréquence (28) à mettre en œuvre le procédé selon l'une quelconque des revendications 1 à 6, lorsque le programme informatique est exécuté sur une unité de traitement du système de mesure de radiofréquence (28).
